# FASCICULE DE BREVET EUROPEEN

(11) **EP 2 182 267 B1**
(45) Date de publication et mention de la délivrance du brevet: **22.02.2012**
(21) Numéro de dépôt: 09306042.4
(22) Date de dépôt: 30.10.2009
(51) Int. Cl.: F16L 41/12, F16L 41/06

(54) **Collier de prise en charge rigide multi-diamètres pour conduites plastiques ou rigides d'eau**
Multidurchmesser starre Rohranbohrschelle für biegbare oder starre Wasserleitungen
Multi-diameter rigid pipe clamp for plastic or rigid water pipes

(30) Priorité: 31.10.2008 FR 0857430
(43) Date de publication de la demande: 05.05.2010
(73) Titulaire: SAINTE LIZAIGNE SA, 36260 Sainte Lizaigne (FR)
(72) Inventeur: Verhee, Damien, 36100 ISSOUDUN (FR); Lejus, Laurent, 18120 QUINCY (FR)
(74) Mandataire: Michelet, Alain

(56) Documents cités:
- FR-A- 2 284 083
- FR-A- 2 360 030
- FR-A- 2 781 549
- US-A- 5 149 144
- US-A1- 2002 000 719

## Description

La présente invention concerne un collier de prise en charge rigide multi-diamètres pour conduites plastiques ou rigides d'eau à mise en oeuvre optimisée. Elle a des applications dans le domaine du génie civil et plus particulièrement de la distribution de l'eau lorsqu'il est par exemple nécessaire d'effectuer un raccordement sur une conduite d'eau pour installer une dérivation.

Les colliers de prise en charge sont destinés au raccordement d'un branchement, par l'intermédiaire d'un robinet de prise en charge, sur une conduite de distribution d'eau potable, en générale sous pression. Les conduites peuvent être réalisées en divers matériaux et une classification générale les sépare en conduites plastiques (par exemple polychlorure de vinyle) et conduites rigides (par exemple fonte).

Les colliers à serrage mécanique peuvent être de deux types :
- colliers rigides avec montage par serrage d'un, deux ou quatre boulons autour de la conduite, il est alors prévu un collier par diamètre extérieur de conduite et une famille de colliers par type de matériau de la conduite afin d'avoir une adaptation satisfaisante.
- colliers à sangles qui s'adaptent à une plage de diamètres de conduite et à pratiquement tous types de matériaux. Un serrage de vis réalise la mise en tension de la sangle qui a été préréglée par un crantage initial au diamètre de la conduite.

Les inconvénients des colliers rigides sont liés à l'utilisation sur les réseaux d'eau de conduites de diamètres extérieur et de matériaux très variables et donc à la nécessité de disposer d'un grand nombre de références de colliers pour couvrir l'ensemble des besoins.

En fonction du matériau de la conduite, le diamètre extérieur réel peut être différent du diamètre nominal annoncé. Ceci est dû au fait que par convention, les conduites rigides sont désignées en diamètre nominal par leur diamètre intérieur et les conduites en matière plastique sont désignées en diamètre nominal par leur diamètre extérieur. Les conduites rigides présentent des différences d'épaisseur entre-elles, ce qui conduit à des diamètres extérieurs différents pour un même diamètre nominal.

Les colliers à sangles qui permettent de couvrir une plage de diamètres sont donc d'une utilisation plus large et nécessitent moins de références et de stocks. Ils induisent cependant sur les conduites en matières plastiques qui sont par nature relativement souples, des contraintes radiales de direction centrifuges et centripètes variables sur la périphérie du collier.

Les enjeux majeurs des installateurs de ces produits concernent le temps de pose, la simplicité d'installation et la fiabilité de ces produits. En effet, les coûts de main d'oeuvre sont déterminants dans le coût global d'un branchement et les coûts générés par un éventuel défaut de pose sont considérablement plus élevés que ceux des produits mis en oeuvre.

Par ailleurs, on connaît également des colliers de prise en charge par les documents FR-2 360 030, correspondant au préambule de la revendication 1 et FR 2 284 083. Toutefois ces colliers doivent être relativement souples du fait de faibles possibilités d'ajustement des vis sur leurs portées.

L'invention concerne un collier rigide et se propose de remédier à ces inconvénients et d'apporter des améliorations sensibles en terme de facilité d'installation, donc de fiabilité, et de temps de mise en oeuvre, en proposant une solution dont les moyens et buts sont:
- disposer d'un collier couvrant plusieurs diamètres de conduites et spécifiquement l'ensemble des diamètres extérieurs de conduite entre deux diamètres nominaux de conduites plastique (par exemple en mm: 111 à 125 ou 126 à 140) afin de réduire le nombre de références, limiter le stock et offrir une souplesse d'emploi.
- proposer un collier rigide dont le diamètre intérieur sera au plus près du diamètre naturel de la conduite plastique couverte afin de ne pas générer de contrainte ni de déformation ou, à tout le moins, de les réduire le plus possible.
- permettre de diminuer le temps de montage, en évitant d'avoir à désassembler totalement le collier, le collier restant d'un encombrement limité en stockage.
- faciliter la pose en permettant le serrage avec, de préférence, une seule vis pour faciliter la mise en oeuvre.
- assurer une grande fiabilité par l'absence d'incertitude sur le montage (absence de composant à démonter, serrage en butée mécanique sur les conduites plastiques).

Ainsi, l'invention concerne un collier de prise en charge rigide multi-diamètres pour conduites plastiques ou rigides d'eau, le collier d'une largeur déterminée étant divisé en deux sections circulaires, une section de robinet et une section de bouclage, les deux sections pouvant être désolidarisées entre-elles au niveau de deux jonctions afin d'ouvrir le collier et pouvant être solidarisées et serrées ensembles afin de former un collier proprement dit qui peut enserrer une conduite, la section de robinet comportant une couronne de prise, la couronne de prise pouvant recevoir vers l'extérieur du collier un robinet de prise et vers l'intérieur du collier pouvant maintenir un joint pressé contre la conduite suite à la mise en place et serrage du collier sur la conduite.

Selon l'invention qui est définie par les caractéristiques techniques de la revendication 1, une première jonction (jonction à vis) est à ajustement continu d'écartement des deux sections avec serrage/desserrage d'au moins une vis de bridage dans des orifices correspondants à travers deux pattes sensiblement parallèles entre elles et qui s'étendent radialement vers l'extérieur du collier à la première extrémité correspondante de chaque section, la seconde jonction (jonction à griffes) est à indexage avec accrochage de griffes étagées de la seconde extrémité d'une première des deux sections sur un support d'accrochage de la seconde extrémité de la deuxième des deux sections, la seconde extrémité de la première section comportant au moins deux étages de griffe(s) afin d'obtenir coté secondes extrémités au moins deux positions stables indexées d'écartement des sections à l'état fermé du collier ou la séparation des sections à l'état ouvert du collier.

Dans divers modes de mise en oeuvre de l'invention, les moyens suivants pouvant être utilisés seuls ou selon toutes les combinaisons techniquement possibles, sont employés :
- avantageusement, les deux sections sont de longueurs circonférentielles sensiblement égales,
- avantageusement, les deux sections sont de longueurs circonférentielles inégales,
- avantageusement, la section de robinet a une forme intérieure en arc de cercle de diamètre Dr déterminé,
- avantageusement, une partie au moins de la section de robinet a une forme intérieure en arc de cercle de diamètre Dr' déterminé,
- avantageusement, la section de bouclage a une forme intérieure en arc de cercle de diamètre Db déterminé,
- selon l'invention, le serrage de la vis de bridage est assuré par un écrou,
- avantageusement, une partie au moins de la section de bouclage a une forme intérieure en arc de cercle de diamètre Db' déterminé,
- Dr=Db,
- Dr <> Db,
- Dr'=Db',
- Dr' <> Db',
- Dr = Dr',
- Dr <> Dr',
- Db = Db',
- Db <> Db',
- avantageusement, la largeur du collier (en dehors de la couronne de prise) est sensiblement uniforme,
- avantageusement, le diamètre de la couronne de prise est supérieur ou égal à la largeur du collier,
- avantageusement, le diamètre de la couronne de prise est inférieur ou égal à la largeur du collier,
- selon l'invention, au moins un des orifices des deux pattes de la première jonction est allongé dans une direction radiale du collier afin de permettre une possibilité de translation dans un plan radial d'une section par rapport à l'autre dans l'état desserré de la vis du collier et l'accrochage/désaccrochage de l'étage de griffe(s) d'avec le support d'accrochage,
- avantageusement, les pattes de la première jonction sont configurées de manière à ce que la vis de bridage reste toujours sensiblement orientée dans une même direction quelle que soit l'écartement des pattes entre elles, ladite direction étant sensiblement parallèle à la direction du robinet de prise lorsque la couronne de prise est disposée sensiblement au milieu circonférentiel de la section de robinet, une des pattes comportant une portée cylindrique ou sphérique
- également, selon l'invention, au moins une des pattes de la première jonction comporte une portée cylindrique ou sphérique, (la/les portées cylindriques ou sphériques peut/peuvent être coté section de robinet ou coté section de bouclage ou des deux cotés)
- avantageusement, le collier comporte deux étages de griffe(s),
- avantageusement, le collier comporte au moins une griffe par étage de griffe(s),
- avantageusement, un étage de griffe(s) comporte une griffe, (griffe médiane ou griffe allongée continue sur la largeur de la section correspondante)
- avantageusement, un étage de griffe(s) comporte deux griffes, (griffes latérales)
- avantageusement, l'étage de griffe(s) le plus extrême comporte une griffe allongée continue sur la largeur de la section correspondante,
- avantageusement, la/les griffes et le support de réception d'étage de griffe(s) sont configurés pour permettre un ajustement des deux sections dans un même plan perpendiculaire à l'axe de la conduite,
- avantageusement, les seconde jonction comporte deux étages de griffes,
- avantageusement, les griffes sont à l'extrémité de la section de bouclage,
- avantageusement, les griffes sont orientées vers l'extérieur du collier et le support d'accrochage est un prolongement radial en U de la seconde extrémité de la section correspondante, la seconde extrémité à griffes étant destinée à passer dans l'ouverture du U et le fond du U formant un support de réception d'un étage de griffe(s),
- avantageusement, la seconde jonction comporte deux étages de griffe(s) et les étages de griffe(s) sont à l'extrémité de la section de bouclage,
- avantageusement, lorsque l'étage de griffe(s) le plus extrême est utilisé (celui qui permet de créer un diamètre interne de collier le plus grand) et que les pattes de la première jonction serrées par la vis sont pratiquement au contact l'une de l'autre, le collier est adapté (la plus grande partie de la surface interne du collier s'applique sur la surface externe de la conduite) à une conduite plastique de diamètre nominal (diamètre extérieur) déterminé,
- avantageusement, lorsque l'étage de griffe le moins extrême est utilisé (celui qui permet de créer un diamètre interne de collier le plus petit) et que les pattes de la première jonction serrées par la vis sont pratiquement au contact l'une de l'autre, le collier peut être bridé sur une conduite rigide de diamètre nominal inférieur au diamètre nominal de conduite plastique pour lequel le collier est adapté en utilisant l'étage de griffe(s) le plus extrême, (sauf exception étant donné que pour les conduites rigides, le diamètre nominal est l'interne et l'épaisseur de parois très diverse)
- avantageusement, la couronne de prise comporte intérieurement un joint tubulaire débordant vers l'intérieur du collier, ladite couronne de prise comportant un moyen de retenue dudit joint empêchant son expulsion radiale vers l'extérieur du collier,
- avantageusement, le moyen de retenue de joint de la couronne de prise et ledit joint comportent en outre des moyens complémentaires de blocage en rotation dudit joint dans ladite couronne de prise,
- avantageusement, les moyens complémentaires de blocage en rotation du joint sont au moins une nervure du joint entrant dans une forme correspondante (complémentaire) de l'intérieur de la couronne de prise,
- avantageusement, les moyens complémentaires de blocage en rotation du joint sont au moins une nervure en saillie du joint entrant dans au moins une gorge correspondante (complémentaire) de l'intérieur de la couronne de prise,
- avantageusement, les moyens complémentaires de blocage en rotation du joint sont au moins une gorge du joint dans laquelle entre au moins une nervure en saillie correspondante (complémentaire) de l'intérieur de la couronne de prise,
- avantageusement, le joint et l'intérieur de la couronne de prise comportent plusieurs nervures et formes ou gorges correspondantes (complémentaires),
- avantageusement, le joint tubulaire est configuré pour se déformer vers l'extérieur lorsqu'il est comprimé sur une conduite.

La présente invention, sans qu'elle en soit pour autant limitée, va maintenant être exemplifiée avec la description qui suit d'un mode de réalisation et en relation avec
la Figure 1 qui représente une vue en éclaté d'un exemple de collier selon l'invention,
la Figure 2 qui représente une vue latérale du collier installé sur une conduite plastique dont le diamètre nominal est adapté à la référence sélectionnée du collier,
les Figures 3 et 4 qui représentent une vue latérale du collier de la même référence que la Figure 2 mais installé cette fois sur des conduites rigides ayant des diamètres nominaux tels que les réglages extrêmes (maximum, minimum) sont atteints,
les Figures 5 et 6 qui représentent une vue latérale et une vue perspective du collier à l'état de stockage ou transport,
la Figure 7 qui représente une vue latérale du collier montrant la manière dont on peut ouvrir le collier pour installation sur une conduite sans avoir à démonter la vis de serrage,
la Figure 8 qui représente une vue de dessus du collier installé sur une conduite rigide, le robinet n'étant pas encore mis en place dans la couronne de la section de robinet du collier,
la Figure 9 qui représente une vue latérale du collier installé sur une conduite rigide avec une coupe partielle et un détail de la jonction à indexage avec accrochage de griffes étagées sur un support d'accrochage, et
la Figure 10 qui représente une vue en coupe d'un joint avec simulation des contraintes subies et déformations lors/après l'installation du collier sur une conduite.

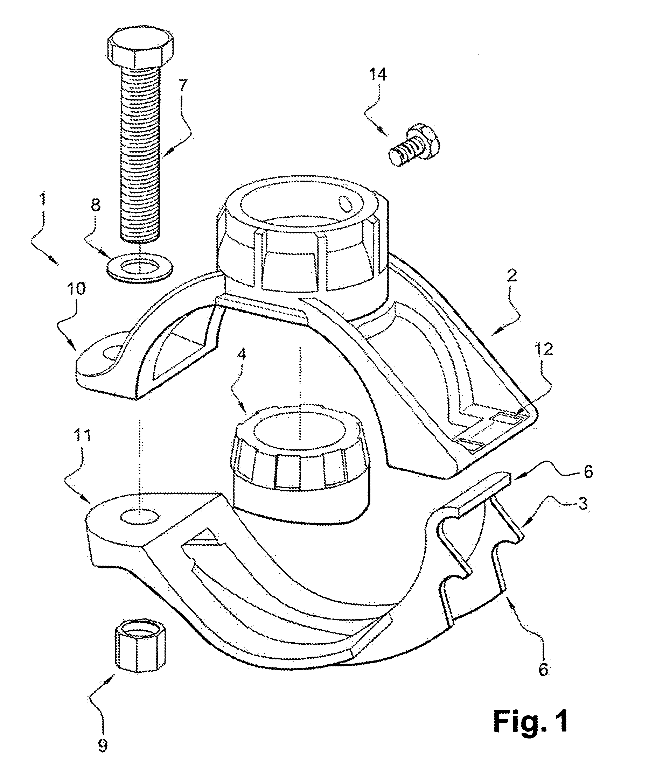

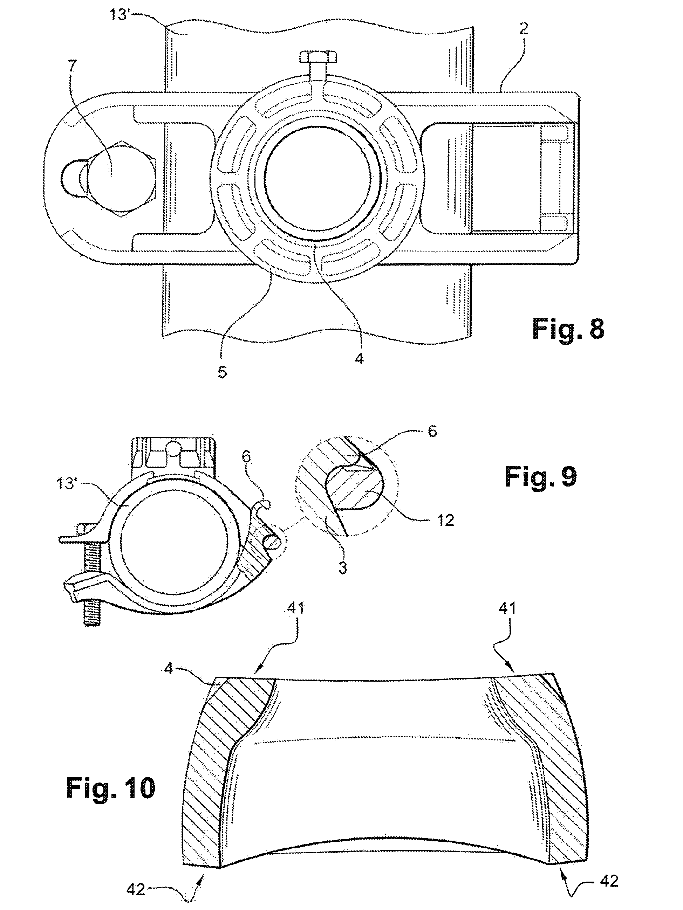

Le collier 1 de la Figure 1 qui est destiné à encercler une conduite d'eau de type rigide ou plastique, comporte une section de robinet 2 et une section de bouclage 3. Ces sections ont une largeur déterminée (mieux visible pour la section de robinet sur la Figure 8), ce qui permet d'avoir une surface de contact sur la conduite plus importante et de stabiliser le collier notamment contre le basculement latéral. De préférence, les sections comportent des ouvertures dans leur largeur afin d'économiser de la matière et de diminuer le poids de l'ensemble. La forme des sections (nervures) permet de compenser l'absence de matière du point de vue de la résistance et rigidité du collier. De préférence, chacune des sections représente approximativement la moitié de la circonférence du collier installé sur une conduite. On verra que ces valeurs sont approximatives car un système d'indexage permet de faire varier le diamètre interne dudit collier. La section de robinet comporte à sa partie médiane une couronne 5 qui comporte intérieurement un passage et un moyen de fixation d'un robinet de prise (non représenté), le moyen de fixation étant de préférence un taraudage. Un joint 4 est glissé par l'intérieur (le bas sur la Figure 1) de la section de robinet 2 dans le passage. Le joint comporte des indentations à sa partie supérieure externe qui viennent se positionner dans des formes correspondantes du passage. Une vis 14 peut être vissée latéralement dans la couronne pour venir bloquer le robinet, une fois ce dernier mis en place et correctement orienté. La gamme de colliers de prise en charge, rigides, multi-diamètres et multi-matériaux possède de préférence deux types d'interfaces standard pour le montage du robinet : les taraudages M40X300 ou M55X300.

Les deux sections du collier sont réunies entre elles au niveau de deux jonctions. La première jonction est à ajustement continu d'écartement des deux sections avec serrage/desserrage d'une vis de bridage 7 dans des orifices correspondants à travers deux pattes 10 (patte de la section de robinet) et 11 (patte de la section de bouclage) sensiblement parallèles entre elles et qui s'étendent radialement vers l'extérieur du collier aux extrémités correspondantes des deux sections. Pour assurer le serrage de la vis de bridage, outre une rondelle 8, un écrou 9 est, selon l'invention, mis en oeuvre. Les orifices de passage de la vis dans les pattes sont allongés radialement et les pattes ont une structure, notamment une portée sphérique, permettant à la vis serrée de reste toujours sensiblement parallèle à l'axe du passage de la couronne qui correspond à l'axe du robinet. La seconde jonction est à indexage avec accrochage de griffes 6 étagées de l'extrémité correspondante de la section de bouclage 3 sur un support d'accrochage 12 de l'extrémité correspondante de la section de robinet 2. Le support est en forme de U et les griffes sont passées dans l'ouverture du U. Deux étages de griffes sont disponibles ce qui permet deux positions indexées d'écartement des deux sections.

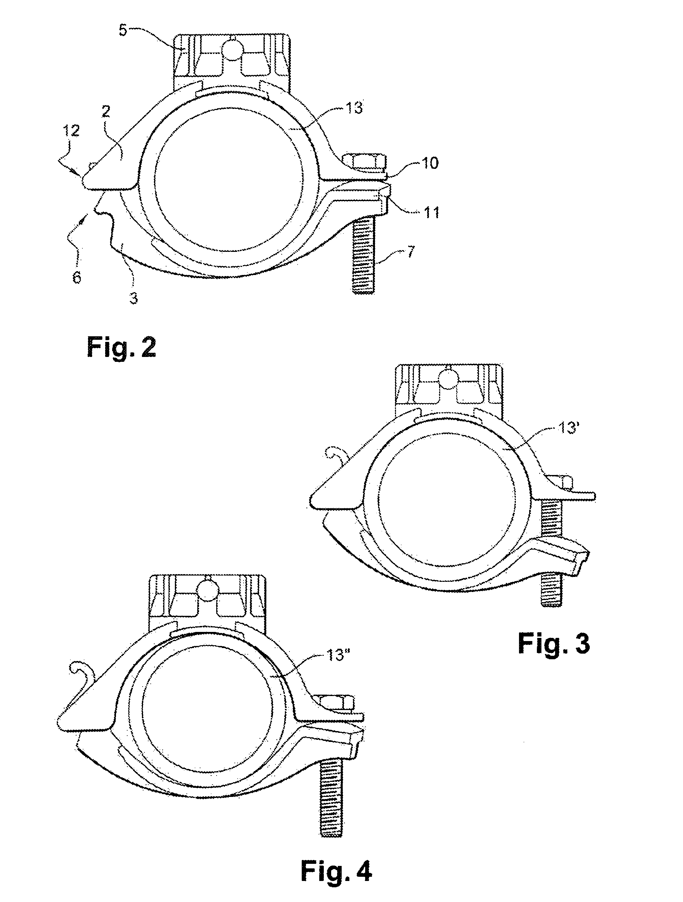

La Figure 2 montre la parfaite adaptation du collier sur une conduite plastique 13 dans le cas où le diamètre nominal de la conduite correspond à celle prévue pour la référence sélectionnée du collier. Dans cet exemple la conduite plastique 13, de référence PE DN 125, est en polyéthylène de diamètre nominal (extérieur) de 125mm et son diamètre interne est de 97mm. Coté jonction d'accrochage, la griffe la plus extrême est utilisée, celle qui donne le plus grand diamètre interne au collier. La jonction coté vis est pratiquement en butée, les pattes étant pratiquement au contact de l'une de l'autre, et la vis de bridage 7 serrée. Une telle configuration évite un serrage excessif du collier qui, sinon, pourrait avoir des conséquences préjudiciables sur la conduite (déformation notamment). Dans le contexte de l'invention, le terme pratiquement signifie (le collier étant plaqué contre la conduite) que les pattes sont déjà au contact avant serrage final de la vis ou que c'est le serrage de la vis qui amène finalement les pattes au contact, lesdites pattes étant avant serrage final séparées d'une distance minime, de préférence inférieure ou égale au mm. On peut noter au sujet du serrage qu'étant donné que le joint 4 déborde de la couronne 5 vers le bas pour s'appliquer contre la conduite, le serrage va provoquer l'écrasement du joint et qu'il existe donc une possibilité d'écart entre la conduite et la section de robinet du collier. Le collier de la Figure 2 couvre une plage de diamètres extérieurs de conduites comprise entre 111 et 125mm.

Sur les Figures 3 et 4 on a représenté deux possibilités d'installation du collier de la Figure 2 sur des conduites rigides 13' et 13" dont la rigidité fait qu'elles risquent moins de subir des déformations causées par un contact moins étendu entre le collier et la conduite. Les diamètres nominaux des conduites rigides correspondantes sont inférieurs à celui pour lequel le collier est parfaitement adapté à une conduite plastique. Sur l'exemple de la Figure 3, la conduite DN 100 a un diamètre nominal (intérieur) de 100mm et un diamètre externe de 122mm. Sur l'exemple de la Figure 4, la conduite DN 100 a un diamètre nominal (intérieur) de 100mm et un diamètre externe de 114mm. Dans ces conditions, les griffes non à l'extrémité de la section de bouclage sont utilisées dans la jonction à indexage, ce qui permet d'obtenir un diamètre intérieur de collier inférieur à celui du cas précédent (conduite plastique). Sur la Figure 3 on a pratiquement le maximum de la plage de réglage pour conduite rigide 13', la vis de bridage étant en limite de possibilité de serrage. Sur la Figure 4 on a pratiquement le minimum de la plage de réglage pour conduite rigide 13", les deux pattes coté jonction à vis étant pratiquement au contact de l'une de l'autre.

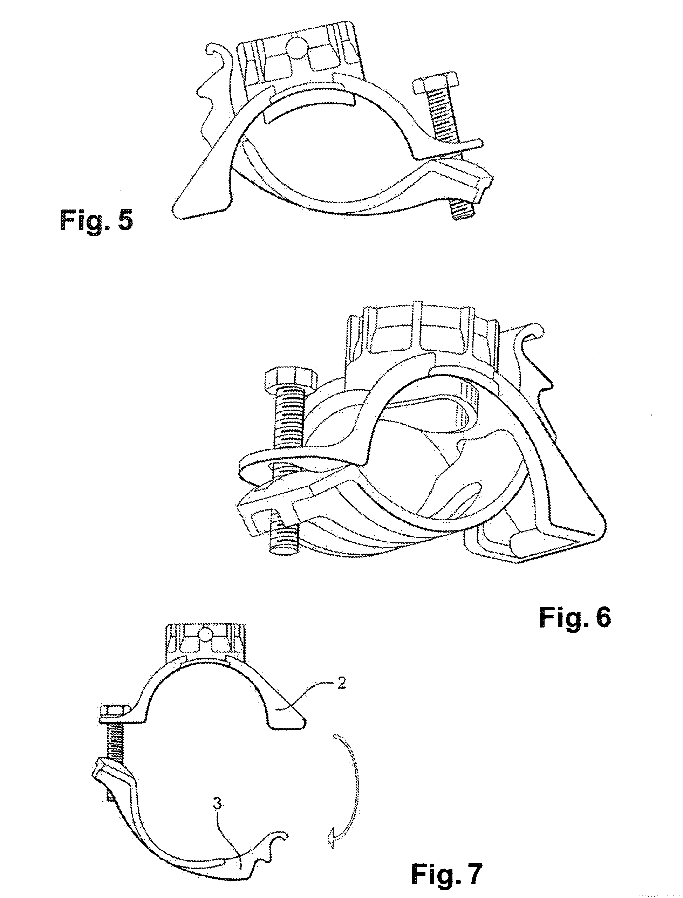

Les Figures 5 et 6 permettent de visualiser le collier dans sa position de stockage ou transport. Du fait que les deux sections s'emboîtent l'une dans l'autre coté jonction à griffes, la hauteur de l'ensemble est réduite. De plus, le collier ainsi replié peut reposer par certaines zones en largeur de ses deux sections sur un support plan et être relativement stable.

La Figure 7 permet de juger de la simplicité de mise en oeuvre du collier de l'invention puisque pour l'installer, il suffit de déplier le collier stocké en séparant les deux extrémités des sections 2, 3 coté jonction à griffe(s) et de passer le collier sur une conduite par le coté ouvert (coté jonction indexée à griffes) sans avoir besoin de dévisser ou démonter d'autres éléments du collier.

A titre d'exemple, le collier a une largeur d'environ 60mm et on voit Figure 8 que la couronne 5 est légèrement plus large que le segment de robinet 2. La largeur du collier peut être plus ou moins importante en fonction du modèle réalisé. Le joint 4 est visible au fond du passage de la couronne et la face supérieure du joint est destinée à venir au contact du robinet quand celui-ci sera vissé dans le passage et qu'il comprimera le joint. On comprend que de part sa forme, le joint ne peut s'échapper par le haut en passant à travers le passage, que le robinet soit en place ou non. De plus, le collier, en particulier la couronne, recouvre le joint.

La Figure 9 détaille la structure de la jonction d'accrochage à griffes et, en particulier, l'interface entre la/les griffes 6 et le support 12 qui comporte un creux de réception d'extrémité de griffe.

La Figure 10 montre les contraintes que subit le joint 4 lors de sa compression par serrage/bridage du collier. Le bord supérieur 41 du joint est destiné à venir au contact du robinet et le bord inférieur au contact de la conduite. Le point (ligne) de contact initial du joint sur la conduite coté bord inférieur 42 est interne (vers le centre du joint) et lors de sa compression, le joint a tendance à se déformer vers l'extérieur comme représenté par la flèche et les deux traits à droite de la Figure.

Sur la figure 10 on peut donc voir la ligne de contact initiale du joint sur la conduite qui permet l'amélioration de l'étanchéité, ainsi que la tendance à la déformation du joint vers l'extérieur lors de la compression du joint sur la conduite. L'interface entre le joint et la conduite est protégée par un large recouvrement du collier et de la couronne. De plus, le joint d'étanchéité assure l'étanchéité de manière continue entre la conduite et l'extrémité du robinet supprimant ainsi tous contacts entre l'eau transportée et le matériau du collier. La conception et la géométrie du joint permettent de maîtriser sa déformation sur l'ensemble de la plage de diamètres couverts et de garantir sa déformation radiale vers l'extérieur afin d'éviter le recours à une bague anti-fluage intérieure. Enfin, un système de nervure sur le joint permet d'optimiser la déformation du joint caoutchouc.

De préférence on met en oeuvre un joint qui présente les caractéristiques qui sont maintenant décrites. Le joint est globalement tubulaire, cylindrique droit, et présente une structure particulière avec en périphérie externe une alternance de nervures en relief et de réserves en retrait. Les nervures et réserves sont des zones parallèles étendues verticalement entre les extrémités haute et basse du joint sauf que les retraits ne descendent pas complètement jusqu'à l'extrémité basse du joint puisqu'il persiste une zone non en retrait vers le bas du joint sur sa périphérie externe. On doit noter que la section de joint (partie basse du passage interne de la couronne de prise à l'opposé de la section de robinet recevant le robinet pour l'y fixer) de la couronne de prise a par contre une surface intérieure régulière cylindrique complémentaire du gabarit de la périphérie externe du joint afin que des espaces libres soient créés entre la section de joint du canal et les réserves au moins à l'état non compressé du joint. Dans certaines variantes, la surface intérieure de la section de joint de la couronne de prise peut comporter une/des indentations notamment pour empêcher la rotation du joint et/ou former une butée d'insertion et/ou d'indexation de position. La partie haute des nervures du joint comporte un chanfrein afin de former des espaces libres supplémentaires entre la partie haute de la section de joint du canal de la couronne de prise et les parties chanfreinées des nervures au moins à l'état non compressé du joint. L'extrémité haute du joint sur laquelle appuie la couronne de prise et/ou le robinet une fois le collier monté sur la conduite, comporte vers l'intérieur une dépouille avec des ondulations (ou indentations selon le cas) et la partie extérieure de l'extrémité haute du joint est sensiblement plane et horizontale.

Des espaces libres supplémentaires sont donc réalisés entre la partie haute de la section de joint de la couronne de prise et les parties chanfreinées des nervures. Dans des modalités de réalisation, le robinet et la couronne de prise appuient sur l'extrémité haute du joint, le robinet appuie sur l'extrémité haute du joint, ou, encore, couronne de prise appuie sur l'extrémité haute du joint.

L'extrémité basse du joint qui présente une forme générale approximativement en selle épousant la conduite est configurée pour que son bord interne vienne au contact de la conduite en premier par rapport à ses autres parties. De plus, une forme en tonneau est mise en oeuvre pour la périphérie interne du joint (non compressé).

Comme on le voit, le collier de l'invention permet un montage avec une déformation maîtrisée des conduites en matière plastique par un bridage en butée positive dans une première position et une deuxième position permettant le bridage des conduites rigides. Le passage d'une position à l'autre est réalisé sans démonter aucune pièce. La plage de serrage est couverte par la même vis de bridage. Une liaison sphérique entre l'écrou à porté sphérique et la patte de la section de bouclage permet:
- une surface de contact constante de l'écrou sur toute la plage de réglage du collier,
- une vis de bridage toujours orientée parallèlement à l'axe de prise en charge.

Dans des variantes de réalisation, la patte sur la section de robinet est cylindrique ou sphérique et dans ce cas, la vis de serrage génère un effort dans une direction orientée de quelques degrés par rapport à l'axe de prise en charge. Plus généralement, la/les portées cylindriques ou sphériques des pattes peuvent être du coté jonction robinet et/ou bouclage du fait, entre autre, que la vis et l'écrou peuvent être inversés par rapport aux exemples des figures.

La plage de réglage en rotation du robinet est de 360°, ceci sans démontage du collier.

La mise en oeuvre d'une vis de bridage et de l'accrochage à griffes permet d'éviter les dissymétries de serrage existant sur les colliers rigides classiques à deux ou quatre boulons.

Le joint d'étanchéité assure directement l'interface entre le culot du robinet et la conduite afin de minimiser le nombre de matériaux en contact avec l'eau et d'assurer durablement l'Agrément de Compatibilité Sanitaire.

Le joint d'étanchéité travaille en compression sur toute sa hauteur afin d'optimiser sa raideur et ainsi ne pas amplifier la déformation des conduites en matière plastique.

On peut noter que le collier rigide de l'invention, lorsqu'il est réalisé en fonte, peut se déformer légèrement lors de son serrage sur une conduite rigide et il se produit alors un certain ajustement du collier au diamètre externe de la conduite rigide.

Les profils des colliers et les joints sont adaptés afin d'obtenir un taux de compression maîtrisé, du plus petit au plus grand diamètre de conduite, sur la plage d'utilisation des colliers. Le joint en forme de tonneau est configuré pour se déformer en augmentant de diamètre par compression, sans diminution du passage de l'eau et sans ajout de pièce supplémentaire, pour ainsi ne pas faire obstacle aux outils de percement des conduites. Le joint est ainsi plaqué sur la paroi intérieure de la couronne de la section de robinet du collier. Le joint est constitué d'une âme étanche d'épaisseur déterminée renforcée par des nervures en partie extérieure. L'interstice entre les nervures constitue ainsi une réserve de volume permettant la déformation de l'âme. La ligne initiale de contact du joint sur la conduite se fait sur l'arête intérieure afin d'éviter les phénomènes de faille en cas d'affaissement local de la conduite autour du trou.

Le joint est mis en place dans la couronne de prise avant l'installation du collier sur la conduite. Le robinet est vissé sur le collier, soit avant, soit après, l'installation du collier sur la conduite. Dans le premier cas, le robinet est vissé en buté sur le collier et orienté en dévissant le robinet de 1 tour maximum. Dans le deuxième cas, le robinet est vissé au contact du joint de collier plus un nombre (entier ou non) déterminé de tour(s) (par exemple un tour) pour compression du joint et ensuite vissé jusqu'à orientation correcte du robinet. C'est le vissage du robinet dans la couronne de la section de robinet qui assure le blocage en translation et/ou serrage du joint (selon que le robinet est mis en place ou non avant l'installation du collier) comprimé entre la conduite et le robinet.

Le volume de stockage/conditionnement du collier livré est minimisé par emboîtement des deux sections du collier, sans démontage de la visserie. Ainsi, aucun composant ne peut être perdu. Les deux sections du collier à l'état de stockage/conditionnement peuvent être immobilisées entre elles par un léger serrage de la vis. De même, le collier à l'état de stockage/conditionnement peut être rendu stable posé sur un support plan par desserrage de la vis afin qu'elle puisse remonter et que le collier repose essentiellement par les faces externes de ses sections sur le support. Le collier est livré prêt à être installé, sans démontage de la visserie.

Le montage sur la conduite en position « conduite plastique » ou « conduite rigide » est réalisé manuellement, un crantage par griffes permettant de maintenir les éléments en position pour faciliter le serrage. Ensuite, un seul boulon est à serrer pour comprimer le joint et brider le collier sur la conduite. Le conditionnement du collier est donc optimisé afin de réduire son encombrement lors du stockage ou transport et de ne pas requérir de démontage pour le préparer à la pose.

Le collier de prise en charge rigide de l'invention assure une adaptation parfaite (contrainte minimale sur la conduite) à une conduite plastique ayant un diamètre nominal correspondant à la référence d'application du collier. Le même collier peut en plus s'adapter à une gamme en diamètres de conduites rigides. En pratique, un collier de l'invention ayant une référence d'application donnée, couvre une plage de diamètres extérieurs de conduites (plastiques et rigides) dont la plus grande dimension est égale à un diamètre nominal de conduite plastique et, de préférence, au diamètre nominal de la conduite plastique de sa référence d'application.

Il en résulte que le nombre de référence de colliers à stocker pour mise en oeuvre sur tout type de conduite est minimisé. Chaque référence de collier (une référence collier par diamètre nominal plastique) assure le ceinturage de la conduite en matière plastique de diamètre extérieur correspondant au diamètre nominal du collier plastique au plus près et évite ainsi toute contrainte et déformation excessive de celle-ci. La conduite plastique est donc préservée et sa longévité assurée dans des conditions optimales de sollicitation. De plus, le serrage sur les conduites plastiques est réalisé en butée, ce qui permet d'éviter les serrages abusifs (sauf erreur sur la référence du collier entraînant l'utilisation d'un collier inadapté au diamètre nominal de la conduite plastique).

L'installation du collier est facilitée, les deux sections, de robinet et de bouclage, restent toujours associées et le serrage est assuré avec une seule vis.

Le serrage est réalisé en butée mécanique (simplicité) pour les diamètres nominaux de conduites plastiques (en utilisant la bonne référence de collier), limitant les contraintes et assurant l'application de l'effort adéquat.

La forme générale du collier permet d'optimiser sa réalisation selon des procédés traditionnels tels que la fonderie de fonte, en disposant d'un nervurage dans un plan perpendiculaire à l'axe de la conduite afin de privilégier la résistance aux efforts de serrage et de sollicitation du collier.

## Revendications

1. Collier de prise en charge (1) multi-diamètres pour conduites plastiques ou rigides d'eau, le collier d'une largeur déterminée étant divisé en deux sections (2, 3) circulaires, une section de robinet (2) et une section de bouclage (3), les deux sections pouvant être désolidarisées entre-elles au niveau de deux jonctions afin d'ouvrir le collier et pouvant être solidarisées et serrées ensembles afin de former un collier proprement dit qui peut enserrer une conduite, la section de robinet comportant une couronne de prise (5), la couronne de prise pouvant recevoir vers l'extérieur du collier un robinet de prise et vers l'intérieur du collier pouvant maintenir un joint pressé contre la conduite suite à la mise en place et serrage du collier sur la conduite, une première jonction étant à ajustement continu d'écartement des deux sections avec serrage/desserrage d'au moins une vis de bridage (7) dans des orifices correspondants à travers deux pattes (10, 11) sensiblement parallèles entre elles et qui s'étendent radialement vers l'extérieur du collier à la première extrémité correspondante de chaque section, la seconde jonction étant à indexage avec accrochage de griffes (6) étagées de la seconde extrémité d'une première des deux sections sur un support d'accrochage (12) de la seconde extrémité de la deuxième des deux sections, la seconde extrémité de la première section comportant au moins deux étages de griffe(s) afin d'obtenir coté secondes extrémités au moins deux positions stables indexées d'écartement des sections à l'état fermé du collier ou la séparation des sections à l'état ouvert du collier, **caractérisé en ce que** le collier est rigide et **en ce qu'**au moins un des orifices des deux pattes de la première jonction est allongé dans une direction radiale du collier et au moins une des pattes de la première jonction comporte une portée cylindrique ou sphérique, le serrage de la vis étant assuré par un écrou (9).

2. Collier selon la revendication 1, **caractérisé en ce que** les griffes (6) sont orientées vers l'extérieur du collier et le support d'accrochage (12) est un prolongement radial en U de la seconde extrémité de la section correspondante, la seconde extrémité à griffes étant destinée à passer dans l'ouverture du U et le fond du U formant un support de réception d'un étage de griffe(s).

3. Collier selon la revendication 1 ou 2, **caractérisé en ce qu'**un étage de griffe comporte deux griffes latérales et l'étage de griffe le plus extrême comporte une griffe allongée continue, sur la longueur de la section correspondante.

4. Collier selon la revendication 1 ou 2, **caractérisé en ce qu'**il comporte deux étages de griffes avec un étage de griffes qui comporte une griffe allongée continue, sur la longueur de section correspondante et un autre étage de griffes qui comporte une griffe allongée continue, sur la longueur de section correspondante.

5. Collier selon l'une quelconque des revendications précédentes, **caractérisé en ce que** la seconde jonction comporte deux étages de griffe(s) et les étages de griffe(s) sont à l'extrémité de la section de bouclage (3).

6. Collier selon la revendication 5, **caractérisé en ce que** lorsque l'étage de griffe(s) le plus extrême est utilisé et que les pattes de la première jonction serrées par la vis sont pratiquement au contact l'une de l'autre, le collier est adapté à une conduite plastique de diamètre nominal déterminé.

7. Collier selon l'une quelconque des revendications précédentes, **caractérisé en ce que** la couronne de prise (5) comporte intérieurement un joint (4) tubulaire débordant vers l'intérieur du collier, ladite couronne de prise (5) comportant un moyen de retenue dudit joint empêchant son expulsion radiale vers l'extérieur du collier.

8. Collier selon la revendication 7, **caractérisé en ce que** le moyen de retenue de joint de la couronne de prise (5) et ledit joint comportent en outre des moyens complémentaires de blocage en rotation dudit joint dans ladite couronne de prise.

9. Collier selon la revendication 8, **caractérisé en ce que** les moyens complémentaires de blocage en rotation du joint sont au moins une nervure du joint entrant dans une forme correspondante de l'intérieur de la couronne de prise.

10. Collier selon la revendication 8 ou 9, **caractérisé en ce que** le joint tubulaire est configuré pour se déformer vers l'extérieur lorsqu'il est comprimé sur une conduite.

11. Collier selon l'une quelconque des revendications précédentes, **caractérisé en ce qu'**il est configuré de façon à ce que lorsque l'étage de griffe(s) le plus extrême est utilisé et que les pattes de la première jonction serrées par la vis sont pratiquement au contact l'une de l'autre, le collier est adapté à une conduite plastique de diamètre nominal extérieur déterminé.

## Claims

1. A multi-diameter tapping saddle (1) for plastic or rigid water lines, the saddle of a defined width being consisted of two circular sections (2, 3), a valve section (2) and a loop section (3), the two sections being detachable from each other at two joints so as to open the saddle and being and tightenable together so as to form a co-calle saddle that may fit tightly around the line, the valve section comprising a tapping ring (5), the tapping ring being capable of receiving, on the outside of the saddle, a tapping valve and, on the inside of the saddle, of holding a seal against the line after the mounting and tightening of the saddle on the line, a first joint being adapted for a continuous adjustment of the spacing between the two sections with tightening/untightening of at least one clamping screw (7) in corresponding orifices through two flanges (10, 11) substantially parallel to each other and extending radially toward the outside of the saddle at the corresponding first end of each section, the second joint being adapted for an indexing with coupling of multistage hooks (6) of the second end of a first one of the two sections to a coupling support (12) of the second end of the second one of the two sections, the second end of the first section comprising at least two stages of hook(s) in order to obtain, on the second end side, at least two indexed steady positions of spacing between the sections, in the closed state of the saddle, or the separation of the sections in the open state of the saddle,
**characterized in that** the saddle is rigid and **in that** at least one of the orifices of the two flanges of the first joint is elongated in a radial direction of the saddle and at least one of the flanges of the first joint comprises a cylindrical or spherical bearing, the screw tightening being ensured by a nut (9).

2. A saddle according to claim 1, **characterized in that** the hooks (6) are directed toward the outside of the saddle and the coupling support (12) is a radial U-shape continuation of the second end of the corresponding section, the second end with hooks being intended to pass through the U opening and the U bottom forming a support for receiving a stage of hook(s).

3. A saddle according to claim 1 or 2, **characterized in that** a hook stage comprises two lateral hooks and the most extreme hook stage comprises an elongated hook, continuous over the length of the corresponding section.

4. A saddle according to claim 1 or 2, **characterized in that** it comprises two hook stages, with one hook stage that comprises an elongated hook, continuous over the length of the corresponding section, and another hook stage that comprises an elongated hook, continuous over the length of the corresponding section.

5. A saddle according to any one of the preceding claims, **characterized in that** the second joint comprises two stages of hook(s) and the stages of hook(s) are at the end of the loop section (3).

6. A saddle according to claim 5, **characterized in that**, when the most extreme stage of hook(s) is use and the flanges of the first joint tightened by the screw are almost in contact with one another, the saddle is adapted to a plastic line of a determined nominal diameter.

7. A saddle according to any one of the preceding claims, **characterized in that** the tapping ring (5) comprises internally a tubular seal (4) protruding toward the inside of the saddle, said tapping ring (5) comprising a means for holding said seal, preventing the radial expulsion thereof toward the outside of the saddle.

8. A saddle according to claim 7, **characterized in that** the seal holding means of the tapping ring (5) and said seal further comprise complementary means for rotationally locking said seal in said tapping ring.

9. A saddle according to claim 8, **characterized in that** the complementary means for rotationally locking the seal are at least one rib on the seal fitting into a corresponding shape of the inside of the tapping ring.

10. A saddle according to claim 8 or 9, **characterized in that** the tubular seal is configured so as to toward the outside when compressed on a line.

11. A saddle according to any one of the preceding claims, **characterized in that** it is configured so that, when the most extreme stage of hook(s) is used and the flanges of the first joint tightened by the screw are almost in contact with one another, the saddle is adapted to a to a plastic line of a determined nominal outer diameter.

## Patentansprüche

1. Multidurchmesser-Rohranbohrschelle (1) für biegbare oder starre Wasserleitungen, wobei die Schelle eine bestimmte Breite hat, die in zwei kreisförmige Abschnitte (2, 3) unterteilt ist, einen Hahnabschnitt (2) und einen Umfassungsabschnitt (3), wobei die zwei Abschnitte voreinander auf dem Niveau von zwei Stößen getrennt werden können, um die Schelle zu öffnen, und miteinander fest verbunden und festgezogen werden können, um eine eigentliche Schelle zu bilden, die eine Leitung umspannen kann, wobei der Hahnabschnitt eignen Aufnahmekranz (5) aufweist, der zur Außenweite der Schelle einen Aufnahmehahn erhalten kann und zur Innenseite der Schelle eine Dichtung aufnehmen kann, die gegen die Leitung gedrückt wird, nachdem die Schelle angebracht und auf der Leitung festgezogen wurde, wobei ein erster Abschnitt kontinuierliche Abstandseinstellung der zwei Abschnitte mit Spannen / Lockern mindestens einer Verflanschungsschraube (7) in entsprechenden Öffnungen durch zwei im Wesentlichen zueinander parallele Pratzen (10, 11) hat, die sich von der Schelle an dem ersten entsprechenden Ende jedes Abschnitts radial nach außen erstrecken, wobei der zweite Stoß eine Positionierung mit Einhaken abgestufter Klauen (6) des zweiten Endes eines ersten der zwei Abschnitte auf einem Einhakträger (12) des zweiten Endes des zweiten der zwei Abschnitte hat, wobei das zweite Ende des ersten Abschnitts mindestens zwei Stufen Klauen aufweist, um im geschlossenen Zustand der Schelle auf der Seite der zweiten Enden mindestens zwei gleichbleibende positionierte Abstandspositionen der Abschnitte oder im offenen Zustand der Schelle das Trennen der Abschnitte zu erhalten,
**dadurch gekennzeichnet, dass** die Schelle starr ist und dass mindestens eine der Öffnungen der zwei Pratzen das ersten Stoßes in eine Richtung radial zu der Schelle länglich ist und mindestens eine der Pratzen des ersten Stoßes eine zylindrische oder kugelförmige Auflage aufweist, wobei das Abziehen der Schraube durch eine Mutter (9) sichergestellt ist.

2. Schelle nach Anspruch 1, **dadurch gekennzeichnet, dass** die Klauen (6) zur Außenweite der Schelle gerichtet sind und dass der Einhakträger (12) eine radiale Verlängerung in U des zweiten Endes des entsprechenden Abschnitts ist, wobei das zweite Ende mit Klauen dazu bestimmt ist, in die Öffnung des U durchzugehen und wobei der Grund des U einen Aufnahmeträger für eine Klauenstufe bildet.

3. Schelle nach Anspruch 1 oder 2, **dadurch gekennzeichnet, dass** eine Klauenstufe zwei seitliche Klauen und die äußerste Klauenstufe eine ununterbrochene längliche Klaue auf der Länge des entsprechenden Abschnitts aufweist.

4. Schelle nach Anspruch 1 oder 2, **dadurch gekennzeichnet, dass** sie zwei Klauenstufen mit einer Klauenstufe aufweiset, die auf der Länge des entsprechenden Abschnitts eine ununterbrochene längliche Klaue aufweist, und eine andere Klauenstufe, die auf der Länge des entsprechenden Abschnitts eine ununterbrochene längliche Klaue aufweist.

5. Schelle nach einem der vorhergehenden Ansprüche, **dadurch gekennzeichnet, dass** der zweite Stoß zwei Klauenstufen aufweist und die Klauenstufen an dem Ende des Verschleifungsabschnitts (3) sind.

6. Schelle nach Anspruch 5, **dadurch gekennzeichnet, dass** die Schelle, wenn die äußerste Klauenstufe verwendet wird und die Pratzen des ersten Stoßes von der Schraube angezogen werden, praktisch miteinander in Berührung sind, wobei die Schelle an eine biegsame Leistung mit einem bestimmten Nenndurchmesser angepasst ist.

7. Schelle nach einem der vorhergehenden Absprüche, **dadurch gekennzeichnet, dass** der Aufnahmekranz (5) innen eine röhrenförmige Dichtung (4) aufweist, die in das Innere der Schelle übersteht, wobei der Aufnahmekranz (5) ein Rückhaltemittel der Dichtung aufweist, das ihr radiales Ausstoßen nach außerhalb der Schelle verhindert.

8. Schelle nach Anspruch 7, **dadurch gekennzeichnet**, das Dichtungsrückhaltemittel des Aufnahmekranzes (5) und die Dichtung ferner ergänzende Mittel zum Blockieren in Drehung der Dichtung in dem Aufnahmekranz aufweisen.

9. Schelle nach Anspruch 8, **dadurch gekennzeichnet, dass** die ergänzenden Mittel zum Blockieren in Drehung der Dichtung mindestens eine Rippe der Dichtung sind, die in eine entsprechende Form des Inneren des Aufnahmekranzes eintritt.

10. Schelle nach Anspruch 8 oder 9, **dadurch gekennzeichnet, dass** die röhrenförmige Dichtung konfiguriert ist, um sich nach außen zu verformen, wenn sie auf einer Leitung zusammengedrückt wird.

11. Schelle nach einem der vorhergehenden Absprüche, **dadurch gekennzeichnet, dass** sie derart konfiguriert ist, dass die Schelle, wenn die äußerste Klauenstufe verwender wird und die Pratzen des ersten Stoßes von der Schraube angezogen werden, praktisch miteinander in Berührung sind, an eine blegsame Leitung mit bestimmten Nennaußendurchmesser angepasst ist.
